# EUROPÄISCHE PATENTSCHRIFT

(11) **EP 3 350 046 B1**
(45) Veröffentlichungstag und Bekanntmachung des Hinweises auf die Patenterteilung: **23.10.2019**
(21) Anmeldenummer: 16770250.5
(22) Anmeldetag: 16.09.2016
(51) Int. Cl.: B60T 13/74, F16H 19/04

(54) **ELEKTROMECHANISCHER BREMSKRAFTVERSTÄRKER**
ELECTROMECHANICAL BRAKE FORCE BOOSTER
SERVOFREIN ÉLECTROMÉCANIQUE

(30) Priorität: 17.09.2015 DE 102015012124; 17.09.2015 DE 102015012125
(43) Veröffentlichungstag der Anmeldung: 25.07.2018
(73) Patentinhaber: Lucas Automotive GmbH, 56070 Koblenz (DE); ZF Friedrichshafen AG, 88046 Friedrichshafen (DE)
(72) Erfinder: WINGENDER, Kurt, 56244 Hartenfels (DE); HOFMANN, Martin, 56743 Mending (DE); KOETH, Boris, 56191 Weitersburg (DE); CALVO MARTINEZ, Jose Manuel, 56642 Kruft (DE); SPARFELD, Jens, 56357 Miehlen (DE); KAMMERS, Stefan, 54570 Oberstadtfeld (DE); WARKENTIN, Paul, 56567 Neuwied (DE); DECKER, Ingo, 88045 Friedrichshafen (DE); HUMM, Klemens, 88090 Immenstaad (DE); BAASCH, Detlef, 88094 Oberteuringen (DE)
(74) Vertreter: Röthinger, Rainer
(86) Internationale Anmeldenummer: PCT/EP2016/072052
(87) Internationale Veröffentlichungsnummer: WO 2017/046380

(56) Entgegenhaltungen:
- EP-A1- 0 792 779
- EP-A1- 2 292 483
- WO-A1-2006/079759
- WO-A1-2011/003643
- WO-A1-2011/026804
- WO-A1-2014/177691
- US-A1- 2014 208 894

## Beschreibung

### Technisches Gebiet

Die vorliegende Erfindung betrifft allgemein das technische Gebiet von elektrohydraulischen Bremskrafterzeugungsvorrichtungen. Sie betrifft insbesondere einen elektromechanischen Bremskraftverstärker, der in einer elektrohydraulischen Bremskrafterzeugungsvorrichtung eingesetzt werden kann.

### Stand der Technik

Elektromechanische Bremskraftverstärker werden von Elektromotoren angetrieben. Um eine Verstärkung der Bremskraft mit dem Bremskraftverstärker erzeugen zu können, muss die Rotationsbewegung der Ausgangswelle des Elektromotors in eine translatorische Bewegung umgewandelt werden. Hierfür sind aus dem Stand der Technik verschiedene Vorrichtungen bekannt.

WO 2014/177691 offenbart ein Bremssystem mit einem Hauptbremszylinder und einer Servobremse. Die Servobremse weist einen Elektromotor auf, dessen Abtriebswelle eine Schraube trägt. Die Schraube treibt zwei Schraubenräder an. Die Schraubenräder sind jeweils über eine Welle mit einem Stirnrad verbunden. Die Stirnräder treiben jeweils eine Zahnstange an, um eine Schubstange zur Betätigung des Hauptzylinders verlagern zu können.

In dem Dokument WO 2011/003643 A1 wird eine Kraftübertragungsanordnung offenbart. Die Kraftübertragungsanordnung weist einen Elektromotor auf, der eine Schneckenwelle antreibt. Auf der Schneckenwelle ist eine Schneckenverzahnung ausgebildet. Die Kraftübertragungsanordnung umfasst ferner ein erstes Schneckenrad, ein zweites Schneckenrad, ein erstes Ritzel und ein zweites Ritzel. Eine Zahnstange weist eine erste Zahnreihe und eine zweite Zahnreihe auf. Die Längsachse der Zahnstange verläuft parallel zur Achse der Schneckenwelle. Das erste Ritzel kämmt mit der ersten Zahnreihe und das zweite Ritzel kämmt mit der zweiten Zahnreihe. Das erste Ritzel ist mit dem ersten Schneckenrad verbunden, sodass sich das erste Schneckenrad und das erste Ritzel gemeinsam drehen. In gleicher Weise ist das zweite Schneckenrad mit dem zweiten Ritzel verbunden. Das erste Schneckenrad und das zweite Schneckenrad werden von der Schneckenverzahnung an der Schneckenwelle gemeinsam angetrieben.

Aus dem Stand der Technik ist ferner ein elektromechanischer Bremskraftverstärker bekannt, der in dem Dokument EP 2 420 421 A1 offenbart wird. Der elektromechanische Bremskraftverstärker weist einen Elektromotor, eine Schubstange und eine Antriebseinrichtung zum Antreiben der Schubstange auf. Eine Antriebswelle des Elektromotors treibt ein erstes Zahnrad mit einer Außenverzahnung und ein zweites Zahnrad mit einer Innenverzahnung an. Das erste Zahnrad treibt ein erstes Getrieberad und das zweite Zahnrad ein zweites Getrieberad an. Das erste Getrieberad und das zweite Getrieberad greifen zum translatorischen Antreiben der Schubstange in eine Verzahnung an der Schubstange ein.

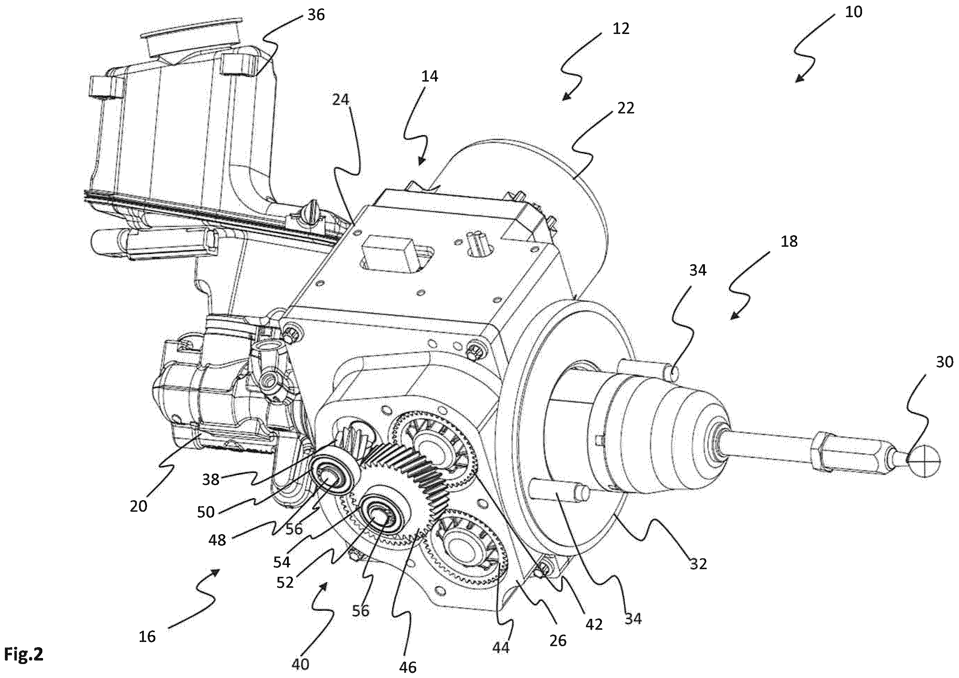

Weiterer Stand der Technik ist aus den Dokumenten WO 2006/079759 A1 und US 2014/0208894 A1 bekannt. Das erste dieser Dokumente (WO 2006/079759 A1) zeigt eine Vorrichtung zum Heben oder Senken von Lasten. Diese umfasst einen Antriebsstrang, welcher zwei Zahnräder antreibt, die in eine Gewindestange greifen. In Fig. 2 werden die beiden Zahnräder mittels eines Zwischenzahnrads angetrieben.

Das zweite dieser Dokumente (US 2014/0208894 A1) offenbart eine Zahhnradanordnung, welche Ungenauigkeiten im Einandergreifen zweier Zahnräder mit einer Gewindestange mittels eines Zwischenrades ausgleichen kann.

Aufgrund ihrer Konstruktion bzw. ihres Aufbaus bauen die aus dem Stand der Technik bekannten Vorrichtungen relativ groß. Dies liegt unter anderem in dem komplexen Aufbau der in den genannten Dokumenten beschriebenen Getriebeanordnungen zum Umwandeln einer Rotation in eine translatorische Bewegung begründet.

### Kurzer Abriss

Es ist Aufgabe der Erfindung ein elektromechanischer Bremskraftverstärker mit einem kompakten Aufbau und damit verringertem Bauraumbedarf anzugeben. Die Aufgabe wird mittels des elektromechanischen Bremskraftverstärkers des Anspruchs gelöst.

Der erfindungsgemäße elektromechanische Bremskraftverstärker für eine Fahrzeugbremsanlage umfasst eine Antriebsanordnung zum Antreiben wenigstens einer zum Betätigen eines Bremszylinders ausgebildeten Betätigungseinrichtung. Die Antriebsanordnung weist wenigstens einen Elektromotor und ein Getriebe zum Koppeln des Elektromotors mit der wenigstens einen Betätigungseinrichtung auf. Das Getriebe weist wenigstens ein erstes Stirnrad und wenigstens ein zweites Stirnrad auf. Ferner weist das Getriebe eine Zwischengetriebestufe auf. Die Zwischengetriebestufe koppelt den Elektromotor mit dem ersten Stirnrad und dem zweiten Stirnrad drehmomentübertragend. Die Zwischengetriebestufe treibt das erste Stirnrad direkt und das zweite Stirnrad über wenigstens ein Zwischenrad an. Die Zwischengetriebestufe weist wenigstens ein erstes Zahnrad und wenigstens ein mit dem ersten Zahnrad koaxiales zweites Zahnrad auf. Das Getriebe weist ein von dem wenigstens einen Elektromotor angetriebenes Eingangszahnrad auf, welches das wenigstens eine erste Zahnrad der Zwischengetriebestufe antreibt. Das wenigstens eine zweite Zahnrad treibt das erste Stirnrad und das wenigstens eine Zwischenrad an.

Durch die Verwendung von Stirnrädern kann in manchen Ausführungsformen gerade in Richtung der Drehachse des Elektromotors ein kompaktes und bauraumsparendes Getriebe bereitgestellt werden. Der kompakte Aufbau des Getriebes kann so zu einer Antriebsanordnung eines elektromechanischen Bremskraftverstärkers führen, die in einem Fahrzeug wenig Bauraum einnimmt.

Das Zwischenrad kann ebenfalls in Form eines Stirnrades ausgebildet sein, d.h. das Zwischenrad kann eine Außenverzahnung aufweisen. Mit dem Zwischenrad wird gemäß einer Variante (z. B. ausschließlich, also ohne Über- oder Untersetzung) erreicht, dass sich die Drehrichtung des zweiten Stirnrades verglichen mit der Drehrichtung des ersten Stirnrades umkehrt. Das erste Stirnrad und das zweite Stirnrad drehen sich somit gegensinnig. Das Getriebe ist dabei dazu eingerichtet, dass die Rotationsbewegung der Ausgangswelle des Elektromotors in eine translatorische Bewegung der Betätigungseinrichtung umgewandelt wird. Dies kann unter anderem durch die mit entgegengesetzten Drehrichtungen angetriebenen Stirnräder erreicht. Durch die translatorische Bewegung der Betätigungseinrichtung kann der Bremszylinder zur Erzeugung einer Bremskraft betätigt werden.

Das erste Zahnrad und das zweite Zahnrad können in Form von Stirnrädern ausgebildet sein. Das erste Zahnrad und das zweite Zahnrad können drehfest miteinander verbunden sein. Das erste Zahnrad kann einen größeren Durchmesser als das zweite Zahnrad aufweisen. Da das zweite Zahnrad einen kleineren Durchmesser als das erste Zahnrad aufweisen kann, kann die Zwischengetriebestufe eine Untersetzung bereitstellen. Das erste Zahnrad und das zweite Zahnrad legen eine Drehachse der Zwischengetriebestufe fest. Die Drehachse der Zwischengetriebestufe kann sich senkrecht zur Längsachse der Betätigungseinrichtung erstrecken.

Das erste Zahnrad der Zwischengetriebestufe kann direkt bzw. unmittelbar in drehmomentübertragenden Eingriff mit dem Eingangszahnrad des Getriebes stehen. Das von dem Elektromotor erzeugte, das Eingangszahnrad antreibende Drehmoment kann unmittelbar von dem Eingangszahnrad auf das erste Zahnrad der Zwischengetriebestufe übertragen werden.

Das zweite Zahnrad kann das erste Stirnrad direkt und das zweite Stirnrad über das wenigstens eine Zwischenrad antreiben. Das zweite Zahnrad kann sowohl mit dem ersten Stirnrad als auch mit dem Zwischenrad unmittelbar in drehmomentübertragenden Eingriff stehen. Das von dem zweiten Zahnrad angetriebene Zwischenrad kann mit dem zweiten Stirnrad in drehmomentübertragenden Eingriff stehen. Das Zwischenrad treibt das zweite Stirnrad gegensinnig zu Drehrichtung des ersten Stirnrads an.

Die Zwischengetriebeeinheit kann als Stirnradgetriebe ausgebildet sein. Das erste Zahnrad und das wenigstens eine koaxial zu dem ersten Zahnrad angeordnete zweite Zahnrad der Zwischengetriebeeinheit können in Form eines Doppelzahnrades ausgeausgebildet sein. Dieses Doppelzahnrad kann die Drehachse der Zwischengetriebeeinheit festlegen.

Das erste Zahnrad der Zwischengetriebestufe kann in Richtung der Drehachse des Elektromotors versetzt zu dem zweiten Zahnrad der Zwischengetriebestufe, dem ersten Stirnrad und dem zweiten Stirnrad angeordnet sein. Das Eingangszahnrad und das erste Zahnrad der Zwischengetriebestufe können in Richtung der Drehachse des Elektromotors in einer ersten Ebene angeordnet sein. Das zweite Zahnrad, das erste Stirnrad, das Zwischenrad und das zweite Stirnrad können in Richtung der Drehachse des Elektromotors in einer zweiten Ebene angeordnet sein. Die erste Ebene und die zweite Ebene können in Richtung der Drehachse des Elektromotors versetzt zueinander angeordnet sein. Über die Zwischengetriebestufe mit ihren beiden Zahnrädern kann eine drehmomentübertragende Verbindung zwischen der ersten Ebene und der zweiten Ebene hergestellt werden.

Der Bremskraftverstärker kann eine Kupplung aufweisen. Die Kupplung kann zwischen dem Elektromotor und dem Getriebe vorgesehen sein. Die Kupplung kann die Ausgangswelle des Elektromotors mit einer Eingangswelle des Getriebes koppeln. Mit der Kupplung können Überlastschäden aufgrund eines zu hohen Drehmoments an dem Elektromotor und/oder dem Getriebe verhindert werden. Hohe Drehmomente können beispielsweise auftreten, wenn der Elektromotor das Getriebe anzutreiben beginnt, oder wenn der Motor den Antrieb des Getriebes beendet. Die Kupplung kann in Form einer Klauenkupplung ausgeführt sein. Der Ausgangswelle des Motors und der Eingangswelle des Getriebes kann jeweils ein Kupplungsteil der Kupplung zugeordnet sein. Die Kupplungsteile können in Richtung der Drehachse des Elektromotors vorstehende Vorsprünge aufweisen, die miteinander zur Drehmomentübertragung in Eingriff bringbar sind. Die Kupplung kann ferner ein Zwischenstück aufweisen, das zwischen den beiden Kupplungsteilen angeordnet ist. Das Zwischenstück kann im Wesentlichen sternförmig ausgebildet sein. Das Zwischenstück kann eine Vielzahl an Armen aufweisen, die sich von einem zentralen Bereich des Zwischenstücks weg erstrecken. Das Zwischenstück kann derart ausgebildet sein, dass sich zwischen den Vorsprüngen der beiden Kupplungsteile jeweils ein Arm des Zwischenstücks befindet. Das Zwischenstück kann aus einem elastischen bzw. nachgiebigen Material hergestellt sein. An der Eingangswelle des Getriebes kann das von dem Elektromotor angetriebene Eingangszahnrad vorgesehen sein. Durch die Kupplung kann die Montage bzw. Demontage des Elektromotors von dem Bremskraftverstärker bzw. der Betätigungseinrichtung vereinfacht werden. Der Elektromotor bildet mit dem ihm zugeordneten Gehäuseteil ein Modul, das mittels der Kupplung schnell und einfach vom Getriebe gelöst und mit diesem verbunden werden kann.

Der elektromechanische Bremskraftverstärker kann ein mehrteiliges Gehäuse aufweisen. Dem Getriebe kann zumindest ein Gehäuseteil zugeordnet sein. Weitere Gehäuseteile können beispielsweise der Betätigungseinrichtung und dem Elektromotor zugeordnet sein. Die Eingangswelle des Getriebes kann an dem dem Getriebe zugeordneten Gehäuseteil gelagert sein. An dem Gehäuseteil kann eine entsprechende Lagerstelle für die Eingangswelle ausgebildet sein. Die Eingangswelle kann über ein Lagerelement an der Lagerstelle des Gehäuseteils gelagert sein. Ferner kann die Zwischengetriebestufe an dem Gehäuseteil gelagert sein. Die Zwischengetriebestufe kann einen Wellenabschnitt aufweisen, an dem ein Lagerelement angeordnet sein kann. Der Wellenabschnitt kann sich entlang der Drehachse der Zwischengetriebestufe erstrecken. An dem Gehäuseteil kann eine Lagerstelle für das Lagerelement der Zwischengetriebestufe ausgebildet sein. Als Lagerelemente können Wälzlager verwendet werden. Beispielsweise können Kugellager oder Nadellager zu Lagerung der Eingangswelle und/oder der Zwischengetriebestufe verwendet werden.

Die wenigstens eine Betätigungseinrichtung kann wenigstens einen Zahnstangenabschnitt aufweisen. Der wenigstens eine Zahnstangenabschnitt kann an dem zweiten Betätigungselement vorgesehen sein, da primär das zweite Betätigungselement von dem Getriebe angetrieben werden soll. An der wenigstens einen Betätigungseinrichtung können ein erster Zahnstangenabschnitt und ein zweiter Zahnstangenabschnitt vorgesehen sein, die mit dem Getriebe koppelbar sind.

Eines der Stirnräder kann mit dem wenigstens einen Zahnstangenabschnitt gekoppelt sein. Dabei kann der erste Zahnstangenabschnitt mit dem ersten Stirnrad und der zweite Zahnstangenabschnitt mit dem zweiten Stirnrad gekoppelt sein. Jedes Stirnrad kann über eine Welle und ein daran angeordnetes Zahnrad mit einem der Zahnstangenabschnitte gekoppelt sein. Die Stirnräder und die ihnen zugeordneten Zahnräder zum Antreiben der Betätigungseinrichtung können drehfest miteinander verbunden sein. Die Stirnräder und die ihnen zugeordneten Zahnräder können auch in Form eines Doppelzahnrad ausgebildet sein. Die Zahnräder können einen kleineren Durchmesser als die Stirnräder aufweisen. Die beiden Zahnstangenabschnitte können an entgegengesetzten Seiten der Betätigungseinrichtung vorgesehen sein.

Je nach im Fahrzeug vorhandenem Bauraum können die Einheiten der Antriebsanordnung wie Getriebe und Elektromotor an verschiedenen Seiten der Betätigungseinrichtung angeordnet sein. Der Elektromotor und das Getriebe können an entgegengesetzten Seiten der Betätigungseinrichtung angeordnet sein. Der Elektromotor kann somit an einer Seite der Betätigungseinrichtung und das Getriebe an der der Seite mit dem Elektromotor abgewandten Seite der Betätigungseinrichtung angeordnet sein. Dadurch können sowohl der Elektromotor als auch das Getriebe nahe an der Betätigungseinrichtung angeordnet werden, um einen bauraumsparenden und kompakten Aufbau des Bremskraftverstärkers zu erreichen. Die Eingangswelle des Getriebes kann sich quer zur Längsachse der Betätigungseinrichtung erstrecken. Ausgehend von dem Getriebe an einer Seite der Betätigungseinrichtung kann sich die Eingangswelle des Getriebes quer zur Längsachse der Betätigungseinrichtung in Richtung des Elektromotors bzw. der Befestigungsstelle des Elektromotors erstrecken. An der Seite der Betätigungseinrichtung, an der der Motor angeordnet ist, kann die Eingangswelle des Getriebes mit der Ausgangswelle des Motors gekoppelt werden.

Das erste Stirnrad, das zweite Stirnrad und das Zwischenrad können eine Schrägverzahnung aufweisen. Ferner können auch das Eingangszahnrad an der Eingangswelle des Getriebes, das erste Zahnrad und das zweite Zahnrad der Zwischengetriebestufe eine Schrägverzahnung aufweisen. Aufgrund der Schrägverzahnung werden nur relativ wenige Zähne zur Drehmomentübertragung zwischen den einzelnen Zahnrädern benötigt. Dies gilt insbesondere für das von dem Elektromotor angetriebene Eingangszahnrad und das zweite Zahnrad der Zwischengetriebestufe. Mit derartigen Zahnrädern mit einer niedrigen Anzahl von Zähnen kann ein relativ hohes Untersetzungsverhältnis erreicht werden. Ferner können die Zahnräder mit einer Schrägverzahnung aufgrund der geringen Anzahl an Zähnen relativ klein ausgeführt werden, was zu einem kompakten Aufbau des Getriebes führt. Kleinere Zahnräder lassen ferner einen geringen Abstand zwischen den Achsen der einzelnen Zahnräder zu, was ebenfalls zu einem kompakten Aufbau des Getriebes führt. Schrägverzahnungen mit einem relativ großen Schrägungswinkel werden auch als Evoloid-Verzahnung bezeichnet.

Das erste Stirnrad und das zweite Stirnrad können jeweils mit einer mit einem Zahnrad versehenen Welle verbunden sein. Die Stirnräder können zusammen mit den Zahnrädern als Doppelzahnrad ausgebildet sein. Die Zahnräder an den von dem ersten Stirnrad und dem zweiten Stirnrad angetriebenen Wellen können jeweils in wenigstens einen Zahnstangenabschnitt eingreifen. Der wenigstens eine Zahnstangenabschnitt kann an der wenigstens einen Betätigungseinrichtung vorgesehen sein. Über den Zahnstangenabschnitt wird die Rotationsbewegung der Stirnräder und der mit den Stirnrädern über Wellen verbundenen Zahnrädern in eine translatorische Bewegung umgewandelt, die die Betätigungseinrichtung in Richtung des Bremszylinders oder von dem Bremszylinder weg verlagern kann. An der wenigstens einen Betätigungseinrichtung können ein erster Zahnstangenabschnitt und ein zweiter Zahnstangenabschnitt vorgesehen sein. Der erste Zahnstangenabschnitt kann mit dem ersten Stirnrad und der zweite Zahnstangenabschnitt kann mit dem zweiten Stirnrad zusammenwirken.

Die Antriebsanordnung kann eine Steuereinheit aufweisen, die zum Ansteuern des wenigstens einen Elektromotors ausgebildet ist. Die Steuereinheit kann zwischen dem Motor und dem Getriebe bzw. zwischen dem Motor und der Betätigungseinrichtung angeordnet sein. Die Steuereinheit kann in einem der Betätigungseinrichtung zugeordneten Gehäuseteil aufgenommen sein. Die Steuereinheit kann derart ausgebildet sein, dass sie nach Demontage des Motors zugänglich ist. Die wenigstens eine Steuereinheit kann eine Sensoranordnung aufweisen oder mit einer Sensoranordnung verbunden sein. Die Sensoranordnung kann beispielsweise dazu eingerichtet sein, die notwendige Verstärkung der auf das Bremspedal ausgeübten Bremskraft bestimmbar zu machen. Anhand der Messwerte der Sensoranordnung kann dann ermittelt werden, welche Verstärkungskraft insbesondere von dem Elektromotor über das Getriebe bereitgestellt werden muss. Die von der Sensoranordnung erfassten Messwerte liefern somit einen Indikator dafür, welche Verstärkungskraft von dem Elektromotor zusammen mit dem Getriebe erzeugt und auf die wenigstens eine Betätigungseinrichtung übertragen werden muss. Einzelne Sensoren der Sensoranordnung können in den Elektromotor und/oder die Steuereinheit integriert werden. Die von dem elektromechanischen Bremskraftverstärker bereitzustellende Verstärkungskraft kann von einem von der Sensoranordnung erfassten Bremswunsch des Fahrers oder von Befehlen eines Fahrdynamikregelprogramms abhängen. Der Bremswunsch kann durch die wenigstens eine Sensoranordnung erfasst werden und von der wenigstens einen Steuereinheit in entsprechende Antriebssignale für den Elektromotor umgewandelt werden. Der Bremswunsch kann beispielsweise durch Erfassen eines Bremspedalwegs und/oder einer auf das Bremspedal einwirkenden Pedalbetätigungskraft bestimmt werden. Ein oder mehrere Fahrdynamikregelungsprogramme, wie beispielsweise ein Antiblockiersystem (ABS), eine Antriebsschlupfregelung (ASR), ein elektronisches Stabilitätsprogramm (ESP) können in der Steuereinheit hinterlegt sein.

Die Antriebsanordnung kann in in einem Fahrzeug montierten Zustand derart angeordnet sein, dass die Drehachse des Elektromotors senkrecht zur Längsachse der Betätigungseinrichtung und mit einem vorbestimmten Winkel zur Hochachse des Fahrzeugs verläuft. Der Elektromotor kann möglichst nah an der von ihm angetriebenen Betätigungseinrichtung angeordnet werden, wodurch ein kompakter und bauraumsparender Aufbau des elektromechanischen Bremskraftverstärkers erreicht wird. Die Positionierung der Antriebsanordnung des elektromechanischen Bremskraftverstärkers mit einem vorbestimmten Winkel zur Hochachse des Fahrzeugs ermöglicht eine verbesserte Ausnutzung des im Fahrzeug vorhandenen Bauraums, der von den in einem Fahrzeug vorhandenen oder vorgegebenen Befestigungsstellen bestimmt wird. Die Antriebsanordnung kann dabei derart ausgerichtet und angeordnet werden, dass der in einem Fahrzeug bezüglich der vorgegebenen Befestigungsstellen vorhandene Bauraum bestmöglich ausgenutzt werden kann. Die Drehachse des Elektromotors kann sich in jedem denkbaren Winkel zur Hochachse des Fahrzeugs erstrecken. Die Drehachse des Elektromotors kann sich beispielsweise auch mit einem Winkel von 0° zur Hochachse des Fahrzeugs erstrecken und damit parallel zur Hochachse verlaufen. Die Drehachse des Elektromotors kann auch mit einem Winkel von 45 Grad bzw. 135 Grad zu der Hochachse des Fahrzeugs verlaufen, um weitere Beispiele zu nennen.

Die Betätigungseinrichtung kann wenigstens eine Betätigungseinheit umfassen, die mit einer auf ein Bremspedal ausgeübten Pedalbetätigungskraft beaufschlagbar ist. Neben der Betätigungseinheit kann die Betätigungseinrichtung wenigstens ein Betätigungselement aufweisen, das von dem Elektromotor über das Getriebe angetrieben wird. Die Betätigungseinheit kann zumindest abschnittsweise in dem Betätigungselement aufgenommen sein. Die Betätigungseinheit und das Betätigungselement können zur Übertragung einer Bremskraft auf den Bremszylinder zusammenwirken. In diesem Fall kann es vorgesehen sein, dass zumindest ein Teil der von dem Bremspedal auf die Betätigungseinheit ausgeübten Bremskraft direkt auf den Bremszylinder übertragen wird. Basierend auf der erfassten, vom Fahrer über das Bremspedal angeforderten Bremskraft kann der Elektromotor von der Steuereinheit angesteuert werden. Der Elektromotor kann über das Getriebe das Betätigungselement zur Erzeugung einer Verstärkungskraft in Richtung des Bremszylinders verlagern. Die Betätigungseinheit und das Betätigungselement werden in Richtung des Bremszylinders verlagert, um über den Bremszylinder einen Bremsdruck an den Radbremsen zu erzeugen.

In einem Fahrzeug sind Befestigungsstellen zur Anbringung eines Bremskraftverstärkers zusammen mit einem Bremszylinder vorgesehen. Diese Befestigungsstellen werden zumeist von den Fahrzeugherstellern vorgegeben. Der elektromechanische Bremskraftverstärker kann wenigstens eine Befestigungseinrichtung aufweisen, die an den im Fahrzeug vorgesehenen Befestigungsstellen angebracht werden kann. Die Befestigungseinrichtung kann beispielswiese einen Flansch mit Öffnungen und Befestigungsbolzen aufweisen, die in den Öffnungen des Flansches aufgenommen werden. Über die Befestigungsbolzen kann der Bremskraftverstärker zusammen mit einem Bremszylinder am Fahrzeug angebracht werden. Der Bremszylinder und der elektromechanische Bremskraftverstärker können eine Baugruppe bilden. Die Befestigungseinrichtung definiert eine Befestigungsebene. Die Drehachse des Elektromotors kann mit einem Winkel von 60 bis 120° zur Befestigungsebene verlaufen.

Ein weiterer Aspekt ist eine elektrohydraulische Kraftfahrzeugbremsanlage mit einem elektromechanischen Bremskraftverstärker der voranstehend beschriebenen Art.

### Kurze Beschreibung der Figuren

Weitere Vorteile, Einzelheiten und Merkmale der hier beschriebenen Lösung ergeben sich aus der nachfolgenden Beschreibung von Ausführungsbeispielen sowie aus den Figuren. Es zeigen:
- Fign. 1-7: perspektivische Ansichten eines elektromechanischen Bremskraftverstärkers gemäß eines Ausführungsbeispiels;
- Fign. 8-10: perspektivische Ansichten eines Getriebes des elektromechanischen Bremskraftverstärkers; und
- Fign. 11-15: perspektivische Ansichten des elektromechanischen Bremskraftverstärkers mit dem Elektromotor im angebrachten und im abgenommenen Zustand.

### Detaillierte Beschreibung

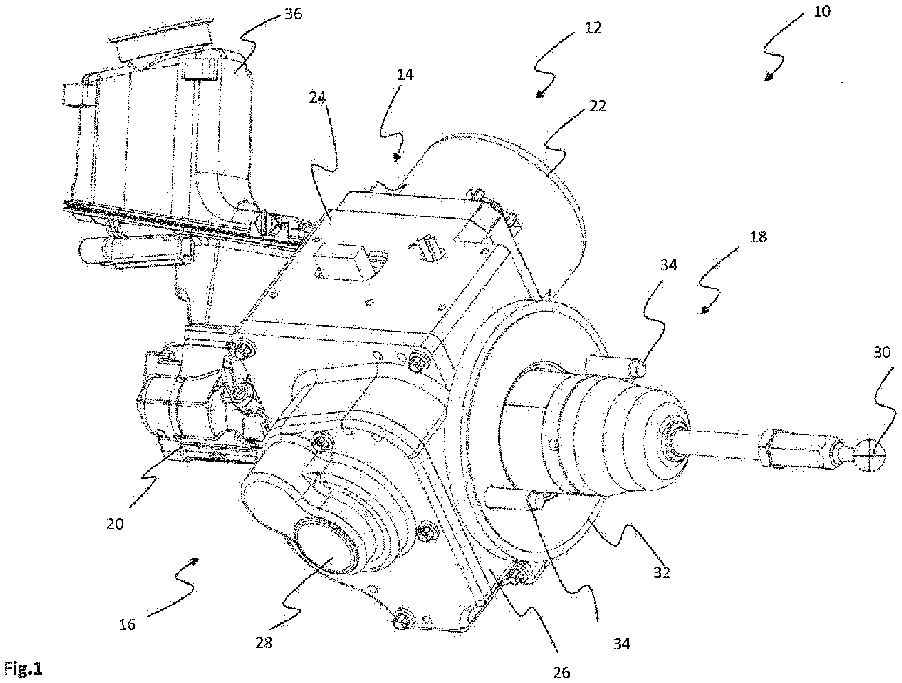

Fig. 1 zeigt eine perspektivische Ansicht eines elektromechanischen Bremskraftverstärkers, der allgemein mit 10 bezeichnet ist.

Der elektromechanische Bremskraftverstärker 10 umfasst einen Motor 12, eine Steuereinheit 14, ein Getriebe 16 und eine Betätigungseinrichtung 18. Die Betätigungseinrichtung 18 ist mit einem Bremszylinder 20 gekoppelt.

Der Bremskraftverstärker 10 weist ein mehrteiliges Gehäuse mit Gehäuseteilen 22, 24, 26 und 28 auf. Die Gehäuseteile 22 und 24 sind dem Motor 12, der Steuereinheit 14 und der Betätigungseinrichtung 18 zugeordnet. Die Gehäuseteile 26 und 28 dienen zur Aufnahme des Getriebes 14. Der Motor 12 ist an einer Seite der Betätigungseinrichtung 18 angeordnet, die der Seite der Betätigungseinrichtung mit dem Getriebe 16 abgewandt ist. Der elektromechanische Bremskraftverstärkter 10 und der Bremszylinder 20 bilden eine Baugruppe.

Die Betätigungseinrichtung 18 weist ein Betätigungsglied 30 auf, das über eine von einem Fahrer des Fahrzeugs erzeugte Pedalkraft betätigbar ist und zur Betätigung des Bremszylinders 20 und des elektromechanischen Bremskraftverstärkers 10 dient. Ferner erstreckt sich die Betätigungseinrichtung 18 durch ein ringförmiges Verkleidungselement 32. Durch das ringförmige Verkleidungselement 32 erstrecken sich Befestigungselemente 34, die zur Befestigung einer Pedalanordnung im Innenraum des Fahrzeugs dienen können. Die Befestigungselemente 34 sind an den Gehäuseteilen 24 und 26 angebracht und bolzenförmig ausgebildet. Im am Fahrzeug angebrachten Zustand erstreckt sich die Spritzwand zwischen den Gehäuseteilen 22, 24, 26 und 28 und dem Verkleidungselement 32. An dem Bremszylinder 20 ist ein Behälter 36 für Bremsflüssigkeit angeordnet.

Figur 2 zeigt eine perspektivische Ansicht des elektromechanischen Bremskraftverstärkers 10, in der das Gehäuseteil 28 abgenommen wurde. Das Getriebe 16 weist ein Eingangszahnrad 38, eine Zwischengetriebestufe 40, ein erstes Stirnrad 42 und ein zweites Stirnrad 44 auf. Von der Zwischengetriebestufe 40 ist in Figur 2 das erste Zahnrad 46 erkennbar. Das erste Zahnrad 42 der Zwischengetriebestufe 40 steht in drehmomentübertragenden Eingriff mit dem Eingangszahnrad 38. Das erste Stirnrad 42 und das zweite Stirnrad 44 werden von der Zwischengetriebestufe 40 angetrieben. Die Stirnräder 42 und 44 treiben die Betätigungseinrichtung 18 an.

Das Eingangszahnrad 38 ist an einer Eingangswelle 48 des Getriebes 16 angeordnet. Die Eingangswelle 48 weist ein Lagerelement 50 auf. Die Eingangswelle 48 ist über das Lagerelement 50 an einer an dem Gehäuseteil 28 (siehe Figur 1) ausgebildeten Lagerstelle gelagert. Die Zwischengetriebestufe 40 weist einen Wellenabschnitt 52 auf, der sich entlang der Drehachse der Zwischengetriebestufe 40 erstreckt. An dem Wellenabschnitt 52 ist ein Lagerelement 54 vorgesehen, über das die Zwischengetriebestufe 40 an einer an dem Gehäuseteil 28 ausgebildeten Lagerstelle gelagert ist. Die Lagerelemente 50 und 54 werden von Sicherungsringen 56 an der Eingangswelle 48 und dem Wellenabschnitt 52 der Zwischengetriebestufe 40 gehalten. Die Lagerelemente 50 und 54 können Wälzlager wie beispielsweise Kugellager sein.

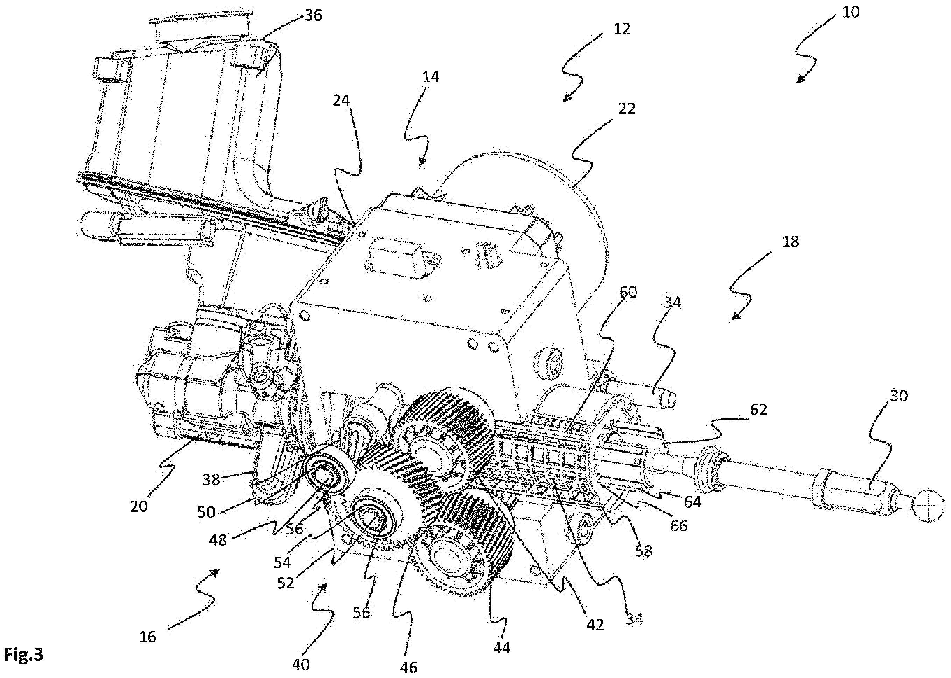

Figur 3 zeigt eine perspektivische Ansicht des elektromechanischen Bremskraftverstärkers 10, in der zusätzlich zu dem Gehäuseteil 28 das Gehäuseteil 26 abgenommen wurde. Das Betätigungsglied 30 kann den elektromechanischen Bremskraftverstärker 10 und den mit diesem gekoppelten Bremszylinder 20 betätigen. Das Betätigungsglied 30 ist mit der Betätigungseinrichtung 18 gekoppelt. Die Betätigungseinrichtung 18 weist ein translatorisch verlagerbares Betätigungselement 58 auf, das von dem Getriebe 16 angetrieben werden kann. Das translatorisch verlagerbare Betätigungselement 58 weist Zahnstangenabschnitte 60 auf, von denen in Figur 3 nur einer teilweise an der Oberseite des Betätigungselements 58 erkennbar ist. Ferner weist die Betätigungseinrichtung eine Betätigungseinheit 62 auf. Die Betätigungseinheit 62 ist in dem Betätigungselement 58 aufgenommen. Mit der Betätigungseinheit 62 kann die durch eine Betätigung des Bremspedals auf das Betätigungsglied 30 ausgeübte Betätigungskraft zumindest teilweise auf den Bremszylinder 20 übertragen werden. Das Betätigungselement 58 und die Betätigungseinheit 62 sind entlang der Längsachse der Betätigungseinrichtung 18 relativ zueinander verlagerbar. In der Aufnahmeöffnung in dem Betätigungselement 58 für die Betätigungseinheit 62 sind Ausnehmungen 64 ausgebildet, die mit komplementären Vorsprüngen 66 an der Betätigungseinheit 62 zusammenwirken. Durch die komplementären Ausnehmungen 64 und Vorsprünge 66 wird die Relativbewegung zwischen dem Betätigungselement 58 und der Betätigungseinheit 62 geführt.

Die Betätigungseinheit 62 kann mit einer von einem Fahrer des Fahrzeugs auf ein Bremspedal ausgeübten Bremskraft beaufschlagt werden. Dadurch wird die Betätigungseinheit 62 in Richtung des Bremszylinders 20 bewegt. Die vom Fahrer angeforderte Verstärkungskraft wird von der Betätigungseinrichtung 18 erzeugt, die von dem Elektromotor 12 über das Getriebe 16 angetrieben wird. Dazu wird das Betätigungselement 58 von dem Elektromotor 12 über das Getriebe 16 und insbesondere über die Zahnräder 70 und die Zahnstangenabschnitte 60 in Richtung des Bremszylinders 20 bewegt, um die vom Fahrer angeforderte Verstärkungskraft zusätzlich in den Bremszylinder 20 zu leiten. Durch die Bewegung der Betätigungseinrichtung 18 mit ihrer Betätigungseinheit 62 und ihrem Betätigungselement 58 in Richtung des Bremszylinders 20 wird in dem Bremszylinder 20 ein Hydraulikdruck erzeugt, der dem von dem Fahrer angeforderten Bremsdruck entspricht. Über den Bremszylinder 20 können die Bremskreise des Fahrzeugs mit Hydraulikfluid und damit mit Hydraulikdruck zur Erzeugung einer Bremskraft an den Radbremsen beaufschlagt werden können.

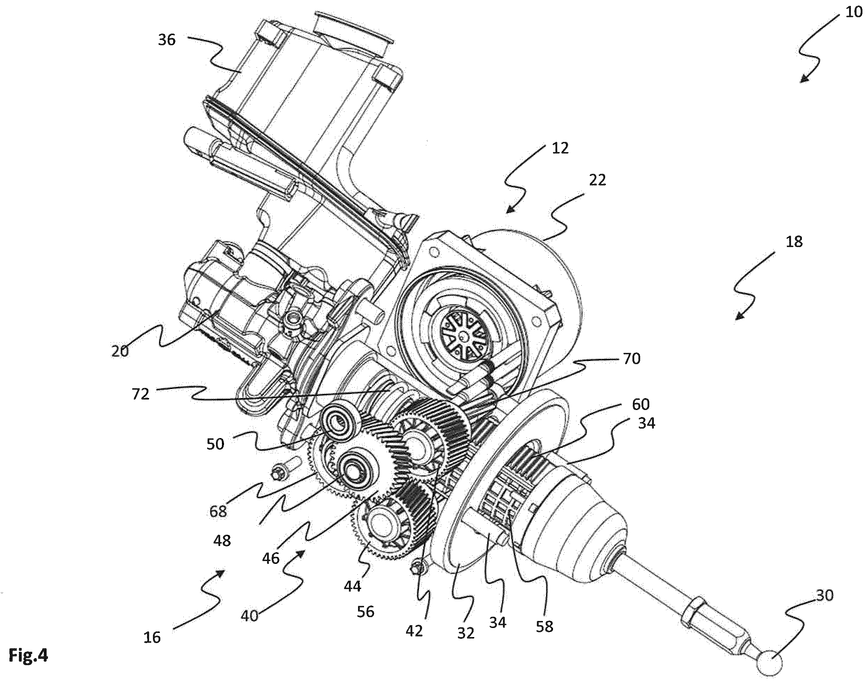

Figur 4 zeigt eine perspektivische Ansicht des elektromechanischen Bremskraftverstärkers 10, in der zusätzlich zu den Gehäuseteilen 26 und 28 das Gehäuseteil 24 abgenommen wurde. Das Getriebe 16 weist neben der Zwischengetriebestufe 40 und den Stirnrädern 42 und 44 ein Zwischenrad 68 auf. Die Zwischengetriebestufe 40 treibt das erste Stirnrad 42 direkt und das zweite Stirnrad 44 über das Zwischenrad 68 an. Die Stirnräder 40 und 42 sind drehmomentübertragend mit Zahnrädern 70 verbunden. In Figur 4 ist nur das Zahnrad 60 an dem ersten Stirnrad 38 erkennbar. Die Zahnräder 70 sind koaxial mit den Stirnrädern 42 und 44 angeordnet. Die Zahnräder 70 stehen in Eingriff mit den Zahnstangenabschnitten 60 an dem translatorisch verlagerbaren Betätigungselement 58 der Betätigungseinrichtung 18. Die Zahnräder 70 bilden zusammen mit den Zahnstangenabschnitten 60 ein Umsetzungsgetriebe, das die Rotation der Zahnräder 70 in eine translatorische Bewegung des Betätigungselements 58 der Betätigungseinrichtung 18 umwandelt.

Der Motor 12 ist mit seinem Gehäuse 22 an einer anderen Seite der Betätigungseinrichtung 18 vorgesehen, als das Getriebe 16. Zwischen dem Getriebe 16 bzw. dessen Zahnräder und der Motor 12 ist eine Feder 72 der Betätigungseinrichtung 18 erkennbar.

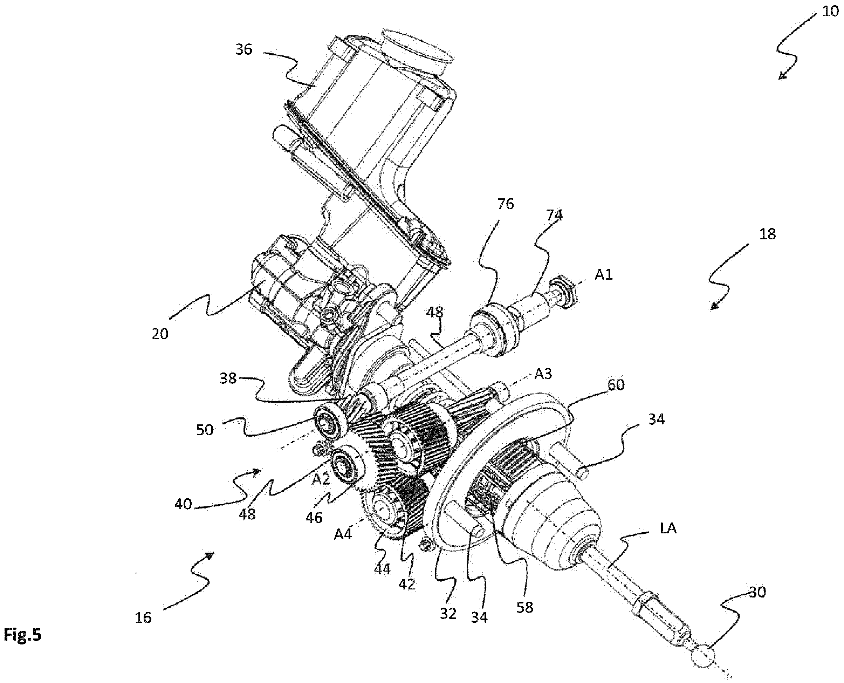

Figur 5 zeigt eine weitere perspektivische Ansicht des elektromechanischen Bremskraftverstärkers 10. Eine Ausgangswelle 74 des Motors 12 ist über eine Kupplung 76 mit der Eingangswelle 48 des Getriebes 16 gekoppelt. An der Eingangswelle 48 sind das Eingangszahnrad 38 und das Lager 50 angeordnet. Das Eingangszahnrad 38 treibt die Zwischengetriebestufe 40 an, die das erste Stirnrad 42 direkt und das zweite Stirnrad 44 über das Zwischenrad 68 antreibt. Die Stirnräder 42 und 44 treiben die Zahnräder 70 an. Die Zahnräder 70 stehen mit den Zahnstangenabschnitten 60 in Eingriff, um das Betätigungselement 58 der Betätigungseinrichtung 18 zur Betätigung des Bremszylinders 20 translatorisch zu verlagern.

In Figur 5 sind die Drehachse A1 des Elektromotors 12, die den Drehachsen der Eingangswelle 38 des Getriebes 16 und der Ausgangswelle 74 des Motors 12 entspricht, die Drehachse A2 der Zwischengetriebestufe 40 und die Drehachsen A3 und A4 der Stirnräder 42 und 44 dargestellt. Ferner ist die Längsachse LA der Betätigungseinrichtung 18 dargestellt. Die Drehachsen A1, A2, A3 und A4 erstrecken sich senkrecht zur Längsachse LA der Betätigungseinrichtung 18. Die Drehachsen A1, A2, A3 und A4 verlaufen parallel zueinander.

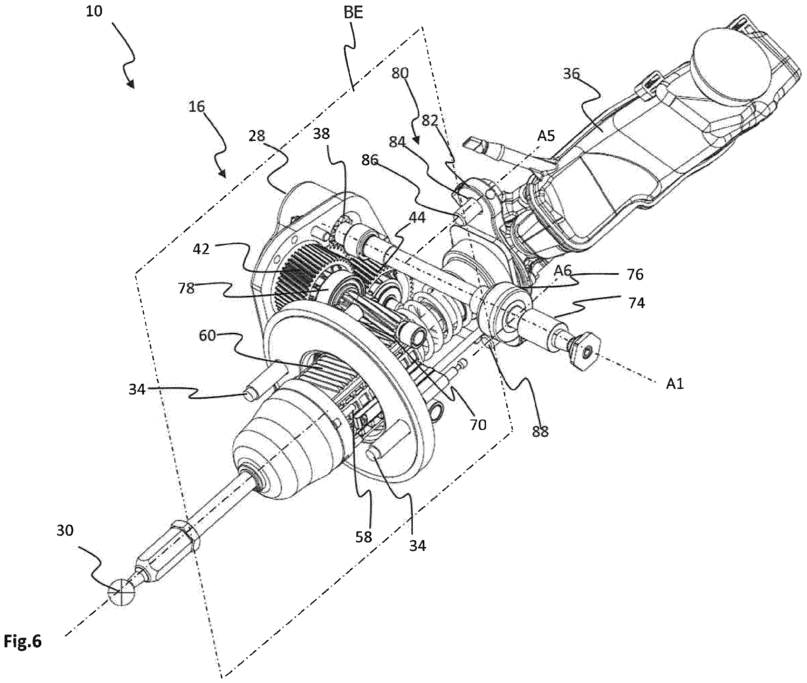

Figur 6 zeigt eine weitere perspektivische Ansicht des elektromechanischen Bremskraftverstärker 10, in der eines der dem Getriebe 16 zugeordneten Gehäuseteile, das Gehäuseteil 26, gezeigt ist. Das Stirnrad 42 ist koaxial mit dem Zahnrad 70 angeordnet und drehfest mit dem Zahnrad 70 verbunden. An dem Stirnrad 42 bzw. den Zahnrad 70 ist ein Lager 78 vorgesehen. Das Lager 78 dient zur Lagerung des Stirnrads 40 mit dem Zahnrad 70 an dem Gehäuseteil 26 (siehe Figur 1).

Die Eingangswelle 48 des Getriebes 16 erstreckt sich quer zur Längsachse LA der Betätigungseinrichtung 18 die Eingangswelle 48 erstreckt sich somit von der Seite der Betätigungseinrichtung 18, an der das Getriebe 16 angeordnet ist, zu der Seite der Betätigungseinrichtung 18, an der der Motor 12 angeordnet ist. An der Seite der Betätigungseinrichtung 18 mit dem Motor 12 wird die Eingangswelle 44 mit der Kupplung 76 mit der Ausgangswelle 74 des Motors 12 gekoppelt (siehe Figur 4).

Der elektromechanische Bremskraftverstärker 10 weist eine Befestigungseinrichtung 80 auf. Die Befestigungseinrichtung 80 umfasst einen Flansch 82 mit Öffnungen 84 und Befestigungsbolzen 86, 88. Die Befestigungsbolzen 86, 88 sind fest mit der Baugruppe bzw. dem Flansch 82 am Bremszylinder 20 verbunden. Die Befestigungsbolzen 86, 88 spannen eine Befestigungsebene BE auf. Die Befestigungsebene BE erstreckt sich durch die Mittelachsen A5 und A6 der Befestigungsbolzen 86, 88. Die Längsachse AL der Betätigungseinrichtung 18 liegt in der Befestigungsebene BE. Die Drehachse A1 des Elektromotors 12 verläuft senkrecht zur Längsachse LA der Betätigungseinrichtung 18 und des Bremszylinders 20. Die Drehachse A1 des Elektromotors 12 verläuft senkrecht zur Befestigungsebene BE. Gleiches gilt für die Drehachse A2 der Zwischengetriebestufe 40 und die Drehachsen A3 und A4der Stirnräder 42, 44 und der mit den Stirnrädern 42, 44 verbundenen Komponenten. Die Drehachse A1 muss nicht senkrecht zur Befestigungsebene verlaufen, sondern kann sich auch mit einem Winkel von 60 bis 120° zur Befestigungsebene erstrecken.

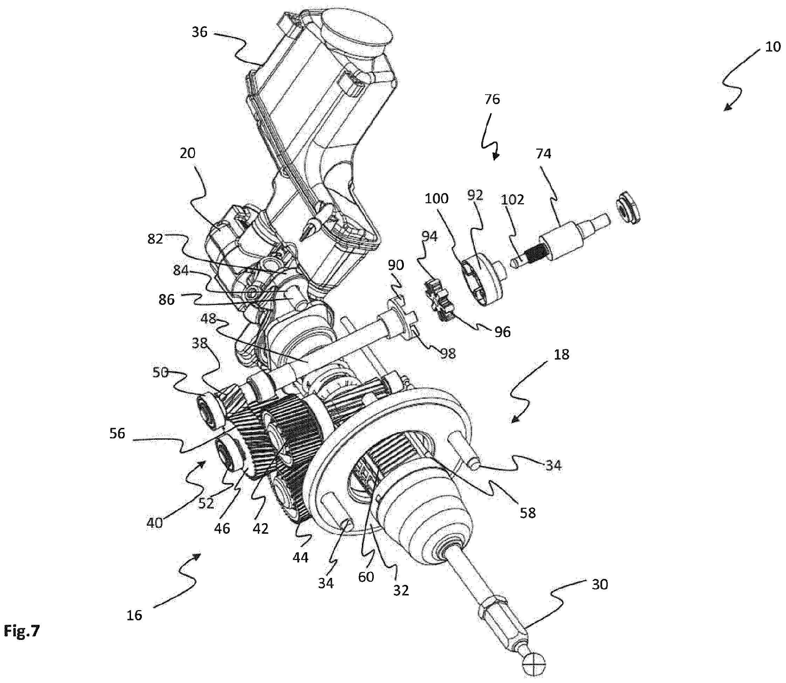

Figur 7 zeigt eine weitere perspektivische Ansicht des elektromechanischen Bremskraftverstärkers 10. Im Unterschied zu den Figuren 5 und 6 ist die Kupplung 76 in Figur 7 im getrennten Zustand dargestellt. Ein erstes Kupplungsteil 90 ist an der Eingangswelle 48 des Getriebes 16 angeordnet. Ein zweites Kupplungsteil 92 ist der Ausgangswelle 74 des Motors 12 zugeordnet. Zwischen dem ersten Kupplungsteil 90 und dem zweiten Kupplungsteil 92 ist ein Zwischenstück 94 angeordnet. Das Zwischenstück 94 ist im Wesentlichen sternförmig ausgebildet und weist eine Vielzahl von Armen 96 auf. An dem ersten Kupplungsteil 90 sind vorstehende Vorsprünge 98 ausgebildet. An dem zweiten Kupplungsteil 92 sind entsprechende Vorsprünge 100 ausgebildet. Das Zwischenstück 84 wird derart zwischen die beiden Kupplungsteile 90 und 92 eingebracht, dass jeweils einer der Arme 96 des Zwischenstücks 94 zwischen den Vorsprüngen 98 des Kupplungsteils 90 und den Vorsprüngen 100 an dem Kupplungsteil 92 angeordnet ist. Das Zwischenstück 94 kann nachgiebig bzw. elastisch ausgebildet sein, um Schäden aufgrund einer Überlast an dem Getriebe 16 oder dem Elektromotor 12 verhindern zu können. Die Ausgangswelle 74 des Motors 12 weist einen Zentrierabschnitt 102 auf, der sich durch die Kupplung 76 in Richtung der Eingangswelle 48 erstreckt. In der Eingangswelle 48 ist eine Öffnung (nicht gezeigt) ausgebildet, die den Endabschnitt des Zentrierabschnitts 102 aufnimmt, sodass die Eingangswelle 48 und die Ausgangswelle 74 gegenseitig zentriert sind und keine Unwuchten auftreten können.

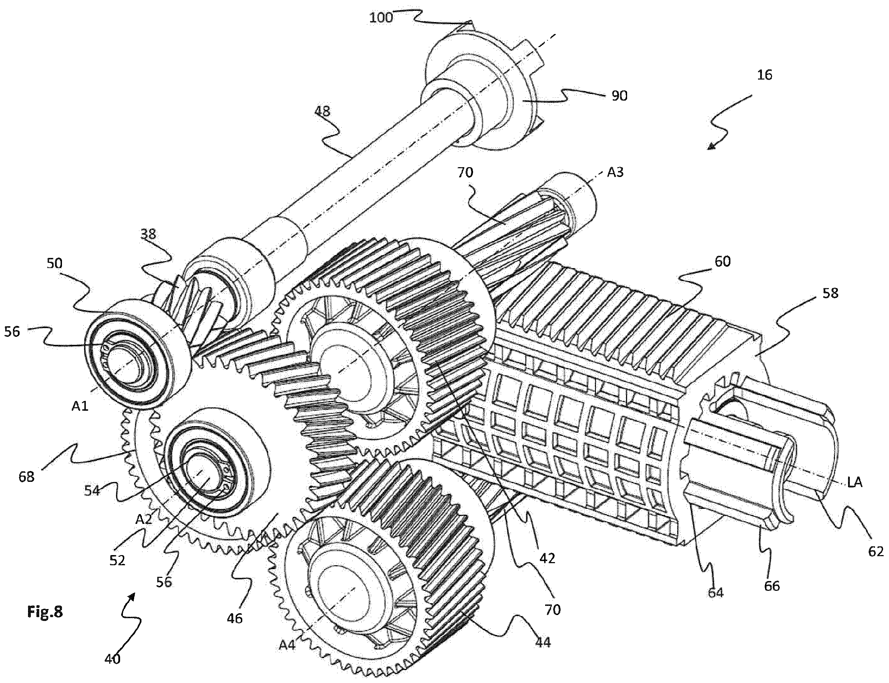

Figur 8 zeigt eine perspektivische Ansicht des Getriebes 16. Das Getriebe 16 wird über die von dem Elektromotor (nicht gezeigt) angetriebene Eingangswelle 48 angetrieben. An der Eingangswelle 48 ist das Kupplungsteil 80 mit seinen Vorsprüngen 88 erkennbar. Die Eingangswelle 48 weist das Eingangszahnrad 38 auf. Über das Eingangszahnrad 38 treibt die Eingangswelle 48 das erste Zahnrad 46 der Zwischengetriebestufe 40 an. Das erste Zahnrad 46 treibt ein nicht gezeigtes mit dem ersten Zahnrad 46 koaxiales zweites Zahnrad an. Das zweite Zahnrad treibt das erste Stirnrad 42 direkt und das zweite Stirnrad 44 über das Zwischenzahnrad (nicht gezeigt) an. Die Stirnräder 42 und 44 treiben ihrerseits die mit ihnen koaxialen Zahnräder 70 an. Die Zahnräder 70 stehen in Eingriff mit den Zahnstangenabschnitten 60 des Betätigungselements 58. Durch die Zahnstangenabschnitte 60 kann die Rotationsbewegung der Zahnräder 70 in eine translatorische Bewegung des Betätigungselements 58 umgewandelt werden. Das Betätigungselement 58 kann sich durch den Antrieb über das Getriebe 16 translatorisch relativ zu der Betätigungseinheit 62 verlagern, um den Bremszylinder (nicht gezeigt) zu betätigen.

In Figur 8 sind ebenfalls die Drehachsen A1, A2, A3 und A4 des Elektromotors (nicht gezeigt), die der Drehachse der Eingangswelle 38 entsprechen, der Zwischengetriebestufe 40 und der Stirnräder 42 und 44 eingetragen. Die Drehachsen A1, A2, A3 und A4 erstrecken sich senkrecht zur Längsachse LA der Betätigungseinrichtung 18. In Figur 8 wird ferner erkennbar, dass die Zahnräder 70 koaxial mit den ihnen zugeordneten Stirnrädern 42 und 44 angeordnet sind.

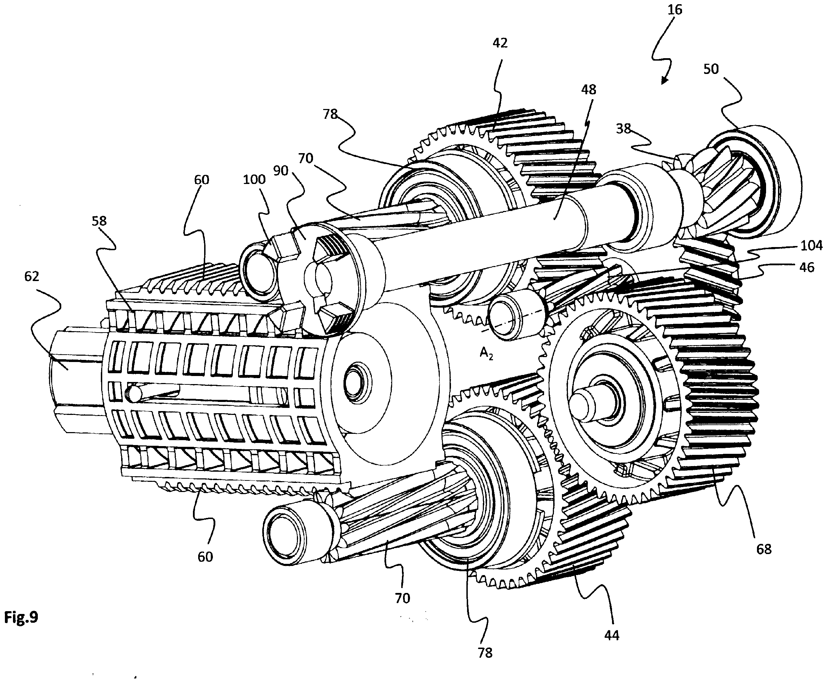

Figur 9 zeigt eine perspektivische Ansicht des Getriebes 16 aus Richtung des Motors (siehe Figur 1) betrachtet. In dem Betätigungselement 58 ist die Betätigungseinheit 62 aufgenommen, die eine von einem Fahrer auf das Bremspedal ausgeübte Kraft zumindest teilweise auf den Bremszylinder (nicht gezeigt) übertragen kann. Die Zwischengetriebestufe 40 weist ein mit dem ersten Zahnrad 46 koaxiales zweites Zahnrad 104 auf. Über das Zahnrad 104 wird das Stirnrad 42 direkt bzw. unmittelbar und das Stirnrad 44 über das Zwischenrad 68 angetrieben. Das Zwischenrad 68 dient zur Drehrichtungsumkehr, sodass sich die Stirnräder 42 und 44 entgegengesetzten Drehrichtungen aufweisen. Durch die entgegengesetzten Drehrichtungen können die Zahnräder 70 an den Stirnrädern 42 und 44 das Betätigungselement 58 translatorisch verlagern. Die Stirnräder 42 und 44 sind zusammen mit den Zahnrädern 70 über Lagerelemente 78 in Form von Wälzlager gelagert. Das Zahnrad 104 weist einen kleineren Durchmesser als das Zahnrad 46 auf, sodass die Zwischengetriebestufe 40 eine Untersetzung bereitstellen kann. Die Zahnräder 70 weisen ebenfalls einen kleineren Durchmesser als die Stirnräder 42 und 44 auf.

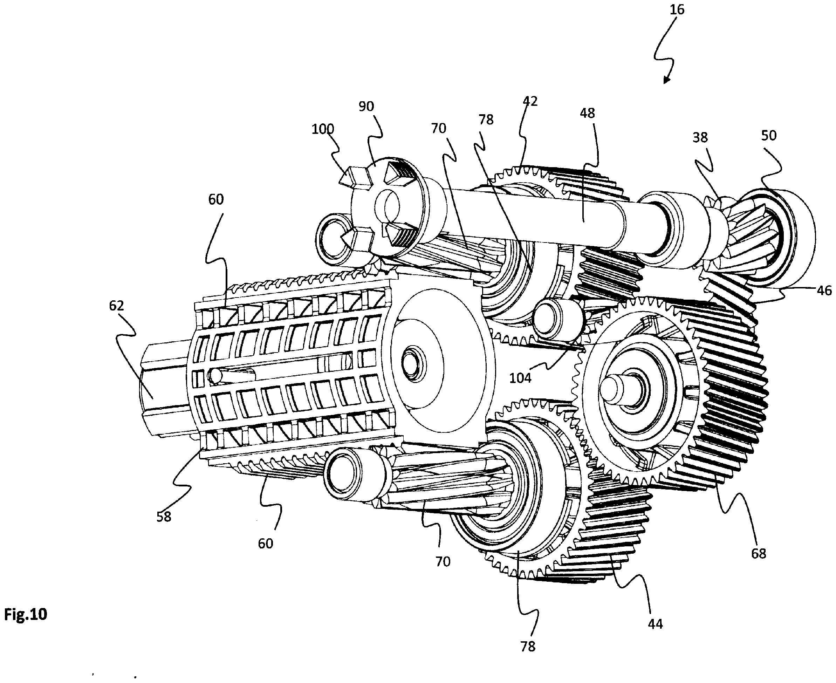

Figur 10 zeigt eine weitere perspektivische Ansicht des Getriebes 16. In einer Aufnahmeöffnung in dem Betätigungselement 58 ist die Betätigungseinheit 62 aufgenommen und kann relativ zu dem Betätigungselement verlagert werden. Zur Verstärkung der Bremskraft wird das Betätigungselement 58 über das Getriebe 16 angetrieben und translatorisch relativ zu der Betätigungseinheit 62 verlagert, um den in Figur 10 nicht gezeigten Bremszylinder weiter zu betätigen.

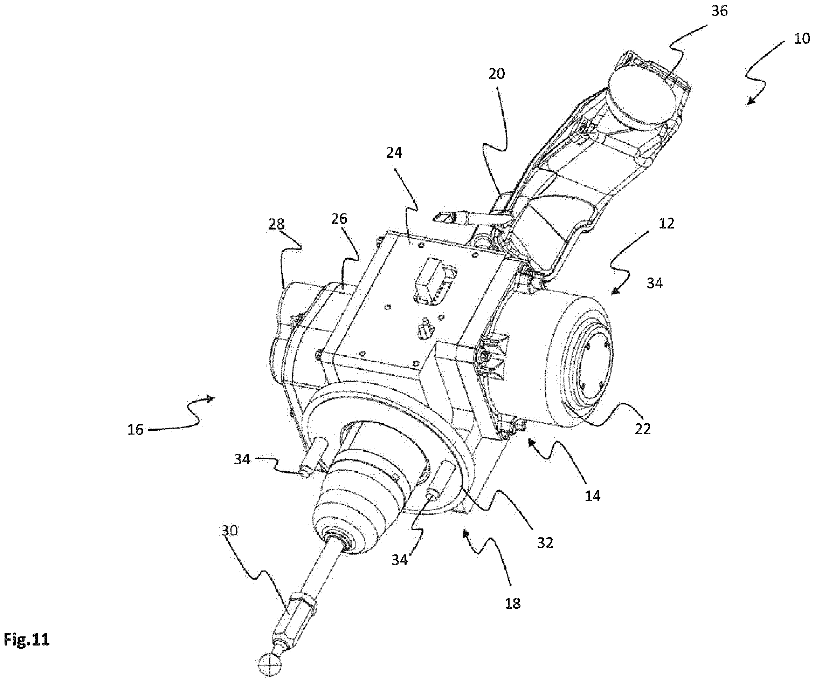

Figur 11 zeigt eine perspektivische Ansicht des elektromechanischen Bremskraftverstärkers 10, die den elektromechanischen Bremskraftverstärker 10 in einem anderen Betrachtungswinkel als Figur 1 zeigt. In Figur 11 ist das mehrteilige Gehäuse des Bremskraftverstärkers mit den Gehäuseteilen 22, 24, 26, 28 gezeigt. Ferner ist in Figur 11 das um die Betätigungseinrichtung 18 angeordnete Verkleidungselement 32 und die Befestigungselemente 34 gezeigt.

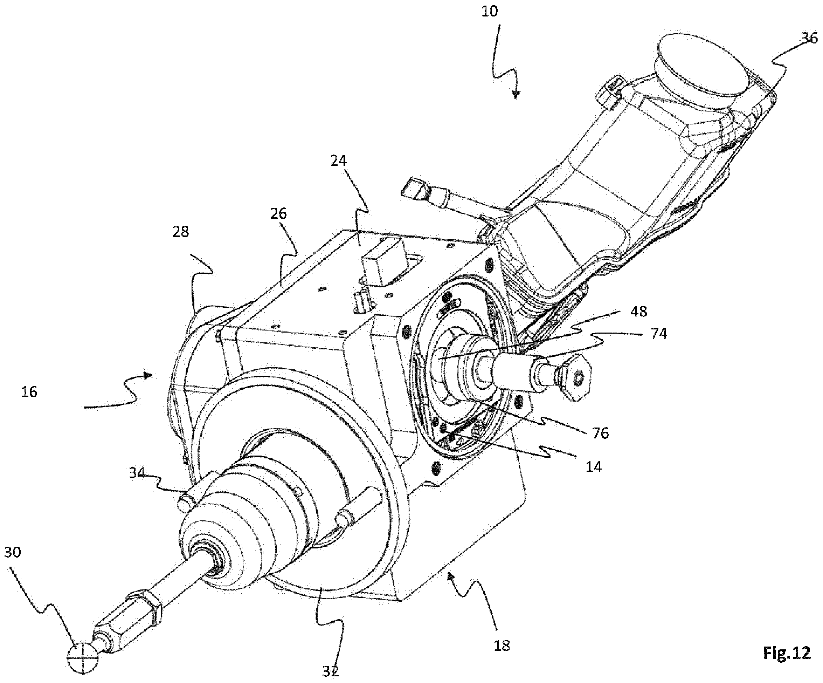

Figur 12 zeigt eine perspektivische Ansicht des Bremskraftverstärkers 10, in der der Motor 12 mit dem ihm zugeordneten Gehäuseteil 22 abgenommen worden ist. Die Ausgangswelle 74 des Elektromotors 12 über die Kupplung 76 mit der Eingangswelle 48 des Getriebes 16 gekoppelt. Der Motor 12 bildet mit seinem Gehäuse 22 ein von der Betätigungseinrichtung 18 abnehmbares Modul.

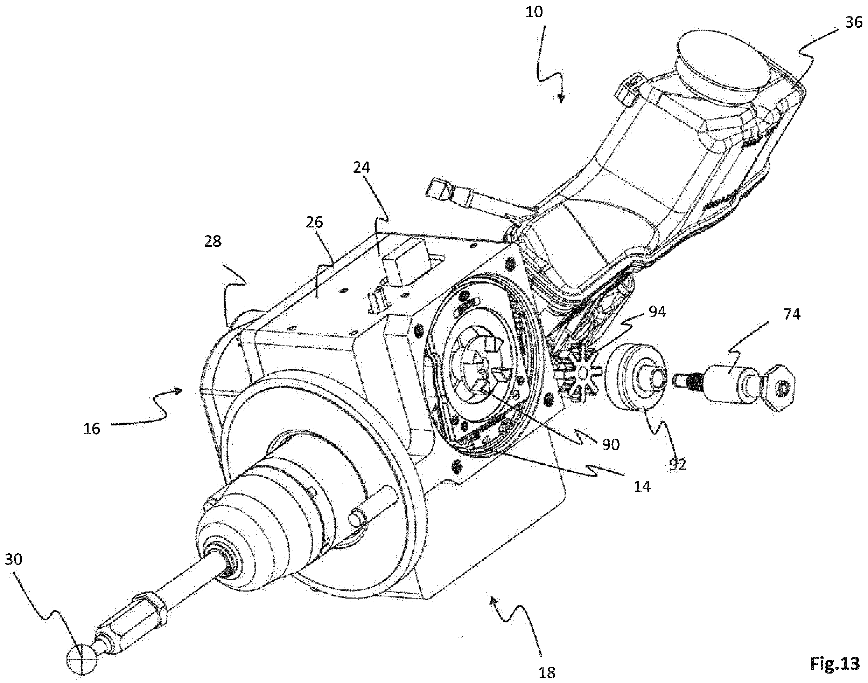

Figur 13 zeigt eine weitere perspektivische Ansicht des elektromechanischen Bremskraftverstärkers 10, in der die einzelnen Teile der Kupplung 76 gezeigt sind. Das erste Kupplungsteil 90 ist an der Eingangswelle 48 des Getriebes 12 angeordnet. Das zweite Kupplungsteil 92 kann mit der Motorausgangswelle 74 verbunden werden. Das Zwischenstück 94 wird zwischen den Kupplungsteilen 90 und 92 aufgenommen. Die Steuereinheit 14 ist in dem Gehäuse 24 aufgenommen. Die Steuereinheit 14 ist nach Demontage des Motors 12 zugänglich. Die Steuereinheit 14 ist um die Eingangswelle 48 des Getriebes 16 angeordnet. Mit anderen Worten erstreckt sich die Eingangswelle 48 durch eine Öffnung in der Steuereinheit 14.

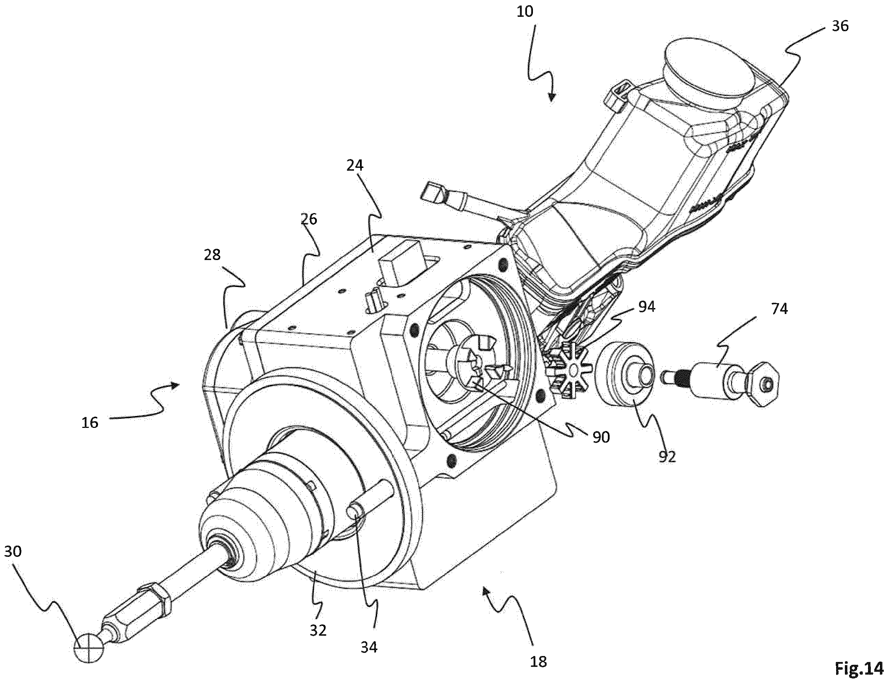

Figur 14 zeigt eine perspektivische Ansicht des elektromechanischen Bremskraftverstärkers 10, in der auch die Steuereinheit 14 von dem Bremskraftverstärker abmontiert wurde. Dies wird unter anderem durch den verglichen mit Figur 13 längeren erkennbaren Abschnitt der Eingangswelle 48 des Getriebes 16 bestätigt.

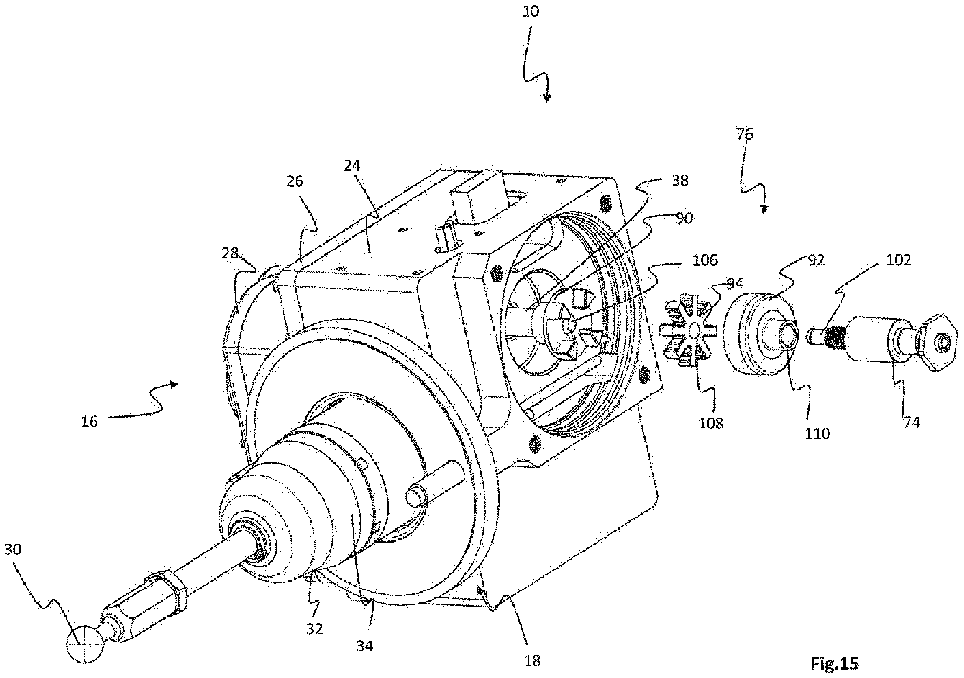

Figur 15 zeigt eine weitere perspektivische Ansicht des elektromechanischen Bremskraftverstärkers 10. Die Eingangswelle 48 und die Kupplungsteile 90, 92 und das Zwischenstück 94 weisen jeweils eine Öffnung 106, 108, 110 auf, durch die sich der Zentrierabschnitt 102 erstreckt. In der Öffnung (nicht gezeigt) in der Eingangswelle 44 des Getriebes 16, die sich an die Öffnung 106 des Kupplungsteils 90 anschließt, wird der Zentrierabschnitt 102 bzw. sein Endabschnitt aufgenommen, um die Ausgangswelle 74 des Motors 12 und die Eingangswelle 48 des Getriebes 16 zentrieren zu können, um Unwuchten zu verhindern.

## Patentansprüche

1. Elektromechanischer Bremskraftverstärker (10) für eine elektrohydraulische Fahrzeugbremsanlage, mit einer Antriebsanordnung zum Antreiben wenigstens einer zum Betätigen eines Bremszylinders (20) ausgebildeten Betätigungseinrichtung (18), wobei die Antriebsanordnung wenigstens einen Elektromotor (12) und ein Getriebe (16) zum Koppeln des wenigstens einen Elektromotors (12) mit der wenigstens einen Betätigungseinrichtung (18) aufweist,
**dadurch gekennzeichnet, dass**
das Getriebe (16) wenigstens ein erstes Stirnrad (42) und wenigstens ein zweites Stirnrad (44) aufweist,
und dass das Getriebe (16) ferner eine Zwischengetriebestufe (40) aufweist, die den wenigstens einen Elektromotor (12) mit dem wenigsten einen ersten Stirnrad (42) und dem wenigstens einen zweiten Stirnrad (44) drehmomentübertragend koppelt, wobei die Zwischengetriebestufe (40) das wenigstens eine erste Stirnrad (42) direkt und das wenigstens eine zweite Stirnrad (44) über wenigstens ein Zwischenrad (68) antreibt, wobei die Zwischengetriebestufe (40) wenigstens ein erstes Zahnrad (46) und wenigstens ein mit dem wenigstens einen ersten Zahnrad (46) koaxiales zweites Zahnrad (104) aufweist, und dass
das Getriebe (16) ein von dem wenigstens einen Elektromotor (12) angetriebenes Eingangszahnrad (38) aufweist, das das wenigstens eine erste Zahnrad (46) der Zwischengetriebestufe (40) antreibt, wobei das wenigstens eine zweite Zahnrad (104) das wenigstens eine erste Stirnrad (42) und das wenigstens eine Zwischenrad (68) antreibt.

2. Elektromechanischer Bremskraftverstärker (10) nach Anspruch 1, wobei das wenigstens eine zweite Zahnrad (104) das wenigstens eine erste Stirnrad (42) direkt und das wenigstens eine zweite Stirnrad (44) über das wenigstens eine Zwischenrad (68) antreibt; und/oder
wobei die Zwischengetriebestufe (40) als Stirnradgetriebe ausgebildet ist und das wenigstens eine erste Zahnrad (46) und das wenigstens eine zweite Zahnrad (104) der Zwischengetriebestufe (40) ein Doppelzahnrad bilden.

3. Elektromechanischer Bremskraftverstärker (10) nach einem der Ansprüche 1 oder 2,
wobei das wenigstens eine erste Zahnrad (46) der Zwischengetriebestufe (40) in Richtung der Drehachse (A1) des wenigstens einen Elektromotors (12) versetzt zu dem wenigstens einen zweiten Zahnrad (104) der Zwischengetriebestufe (40), dem wenigstens einen ersten Stirnrad (42) und dem wenigstens einen zweiten Stirnrad (44) angeordnet ist.

4. Elektromechanischer Bremskraftverstärker (10) nach einem der Ansprüche 1 bis 3,
wobei das Eingangszahnrad (38) und das wenigstens eine erste Zahnrad (46) der Zwischengetriebestufe (40) in Richtung der Drehachse (A1) des wenigstens einen Elektromotors in einer ersten Ebene angeordnet sind; und/oder wobei das wenigstens eine zweite Zahnrad (104), das wenigstens eine erste Stirnrad (42), das wenigstens eine Zwischenrad (68) und das wenigstens eine zweite Stirnrad (44) in Richtung der Drehachse (A1) des wenigstens einen Elektromotors (12) in einer zweiten Ebene angeordnet sind.

5. Elektromechanischer Bremskraftverstärker (10) nach einem der Ansprüche 1 bis 4,
wobei zwischen dem wenigstens einen Elektromotor (12) und dem Getriebe (16) eine Kupplung (76) vorgesehen ist, die eine Ausgangswelle (74) des wenigstens einen Elektromotors (12) mit einer Eingangswelle (48) des Getriebes (16) koppelt, wobei das von dem wenigstens einen Elektromotor (12) angetriebene Eingangszahnrad (38) an der Eingangswelle (48) des Getriebes (16) vorgesehen ist.

6. Elektromechanischer Bremskraftverstärker (10) nach einem der Ansprüche 1 bis 5,
wobei der elektromechanische Bremskraftverstärker (10) ein mehrteiliges Gehäuse (22, 24, 26, 28) aufweist, wobei dem Getriebe (16) zumindest ein Gehäuseteil (26, 28) zugeordnet ist.

7. Elektromechanischer Bremskraftverstärker (10) nach Anspruch 6 in Kombination mit Anspruch 5,
wobei die Eingangswelle (48) des Getriebes (16) an zumindest einem dem Getriebe (16) zugeordneten Gehäuseteil (28) gelagert ist;
wobei, optional, die Zwischengetriebestufe (40) an zumindest einem dem Getriebe (16) zugeordneten Gehäuseteil (28) gelagert ist.

8. Elektromechanischer Bremskraftverstärker (10) nach einem der Ansprüche 1 bis 7,
wobei die wenigstens eine Betätigungseinrichtung (18) wenigstens einen Zahnstangenabschnitt (60) aufweist, der mit dem Getriebe (16) koppelbar ist, und
wobei, optional, die wenigstens eine Betätigungseinrichtung (18) einen ersten und einen zweiten Zahnstangenabschnitt (60) aufweist, die an entgegengesetzten Seiten der wenigstens einen Betätigungseinrichtung (18) angeordnet sind.

9. Elektromechanischer Bremskraftverstärker (10) nach einem der Ansprüche 1 bis 8,
wobei der wenigstens eine Elektromotor (12) und das Getriebe (16) an entgegengesetzten Seiten der wenigstens einen Betätigungseinrichtung (18) angeordnet sind.

10. Elektromechanischer Bremskraftverstärker (10) nach einem der Ansprüche 6 bis 9 in Kombination mit Anspruch 5,
wobei sich die Eingangswelle (48) des Getriebes (16) quer zur Längsachse (LA) der wenigstens einen Betätigungseinrichtung (18) erstreckt.

11. Elektromechanischer Bremskraftverstärker (10) nach einem der Ansprüche 1 bis 9,
wobei zumindest das wenigstens eine erste Stirnrad (42), das wenigstens eine zweite Stirnrad (44) und das wenigstens eine Zwischenrad (68) eine Schrägverzahnung aufweisen.

12. Elektromechanischer Bremskraftverstärkter (10) nach einem der Ansprüche 1 bis 11,
wobei das wenigstens eine erste Stirnrad (42) und das wenigstens eine zweite Stirnrad (44) jeweils mit einer Welle verbunden sind, die jeweils wenigstens ein Zahnrad (70) aufweisen; und/oder
wobei die Antriebsanordnung wenigstens eine Steuereinheit (14) aufweist, die zum Ansteuern des wenigstens einen Elektromotors (12) eingerichtet ist.

13. Elektromechanischer Bremskraftverstärker (10) nach einem der Ansprüche 1 bis 12,
wobei die Antriebsanordnung im in einem Fahrzeug montierten Zustand derart anordenbar ist, dass die Drehachse (A1) des wenigstens einen Elektromotors (12) senkrecht zur Längsachse (LA) der wenigstens einen Betätigungseinrichtung (18) und mit einem vorbestimmten Winkel zur Hochachse des Fahrzeugs verläuft; und/oder
wobei die wenigstens eine Betätigungseinrichtung (18) wenigstens eine Betätigungseinheit (62), die mit einer auf ein Bremspedal ausgeübten Pedalkraft beaufschlagbar ist, und wenigstens ein Betätigungselement (58) aufweist, das von dem wenigstens einen Elektromotor (12) über das Getriebe (16) angetrieben wird.

14. Elektromechanischer Bremskraftverstärker (10) nach einem der Ansprüche 1 bis 13,
wobei der elektromechanische Bremskraftverstärker (10) über wenigstens eine Befestigungseinrichtung (80) an einem Fahrzeug anbringbar ist, wobei die wenigstens eine Befestigungseinrichtung eine Befestigungsebene (BE) definiert, in der die Längsachse (LA) der wenigstens einen Betätigungseinrichtung (18) liegt.

15. Elektrohydraulische Kraftfahrzeugbremsanlage mit einem Bremszylinder (20) und einem elektromechanischen Bremskraftverstärker (10) nach einem der Ansprüche 1 bis 14, wobei der elektromechanische Bremskraftverstärker (10) eine Betätigung des Bremszylinders (20) bewirkt.

## Claims

1. An electromechanical brake force booster (10) for an electrohydraulic vehicle brake system, comprising a drive arrangement for driving at least one actuating device (18) which is designed for actuating a brake cylinder (20), wherein the drive arrangement has at least one electric motor (12) and a gearing (16) for coupling the at least one electric motor (12) to the at least one actuating device (18),
**characterized in that**
the gearing (16) has at least one first spur gear (42) and at least one second spur gear (44), wherein the gearing (16) furthermore has an intermediate gearing stage (40) which couples the at least one electric motor (12) to the at least one first spur gear (42) and to the at least one second spur gear (44) in torque-transmitting fashion, wherein the intermediate gearing stage (40) drives the at least one first spur gear (42) directly and drives the at least one second spur gear (44) via at least one intermediate gear (68), wherein the intermediate gearing stage (40) has at least one first gearwheel (46) and at least one second gearwheel (104) coaxial to the at least one first gearwheel (46), and that
the gearing (16) has an input gearwheel (38) which is driven by the at least one electric motor (12) and drives the at least one first gearwheel (46) of the intermediate gearing stage (40), wherein the at least one second gearwheel (104) drives the at least one first spur gear (42) and the at least one intermediate gear (68).

2. The electromechanical brake force booster (10) as claimed in claim 1, wherein the at least one second gearwheel (104) drives the at least one first spur gear (42) directly and drives the at least one second spur gear (44) via the at least one intermediate gear (68); and/or
wherein the intermediate gearing stage (40) is designed as a spur gearing, and the at least one first gearwheel (46) and the at least one second gearwheel (104) of the intermediate gearing stage (40) form a double gearwheel.

3. The electromechanical brake force booster (10) as claimed in claim 1 or 2,
wherein the at least one first gearwheel (46) of the intermediate gearing stage (40) is arranged offset in the direction of the axis of rotation (A1) of the at least one electric motor (12) with respect to the at least one second gearwheel (104) of the intermediate gearing stage (40), the at least one first spur gear (42) and the at least one second spur gear (44).

4. The electromechanical brake force booster (10) as claimed in any of claims 1 to 3, wherein the input gearwheel (38) and the at least one first gearwheel (46) of the intermediate gearing stage (40) are arranged in a first plane in the direction of the axis of rotation (A1) of the at least one electric motor (12); and/or
wherein the at least one second gearwheel (104), the at least one first spur gear (42), the at least one intermediate gear (68) and the at least one second spur gear (44) are arranged in a second plane in the direction of the axis of rotation (A1) of the at least one electric motor (12).

5. The electromechanical brake force booster (10) as claimed in any of claims 1 to 4, wherein a clutch (76) is provided between the at least one electric motor (12) and the gearing (16), that couples an output shaft (74) of the at least one electric motor (12) to an input shaft (48) of the gearing (16), wherein the input gearwheel (38) which is driven by the at least one electric motor (12) is provided on the input shaft (48) of the gearing (16).

6. The electromechanical brake force booster (10) as claimed in any of claims 1 to 5, wherein the electromechanical brake force booster (10) has a multipart housing (22, 24, 26, 28), wherein at least one housing part (26, 28) is assigned to the gearing (16).

7. The electromechanical brake force booster (10) as claimed in claim 6 in combination with claim 5, wherein the input shaft (48) of the gearing (16) is mounted on at least one housing part (28) assigned to the gearing (16);
wherein, optionally, the intermediate gearing stage (40) is mounted on the at least one housing part (28) assigned to the gearing (16).

8. The electromechanical brake force booster (10) as claimed in any of claims 1 to 7, wherein the at least one actuating device (18) has at least one rack portion (60) which is coupleable to the gearing (16); and
wherein, optionally, the at least one actuating device (18) has a first and a second rack portion (60) which are arranged on opposite sides of the at least one actuating device (18).

9. The electromechanical brake force booster (10) as claimed in any of claims 1 to 8, wherein the at least one electric motor (12) and the gearing (16) are arranged on opposite sides of the at least one actuating device (18).

10. The electromechanical brake force booster (10) as claimed in any of claims 6 to 9 in combination with claim 5, wherein the input shaft (48) of the gearing (16) extends transversely with respect to the longitudinal axis (LA) of the at least one actuating device (18).

11. The electromechanical brake force booster (10) as claimed in any of claims 1 to 9, wherein at least the at least one first spur gear (42), the at least one second spur gear (44) and the at least one intermediate gear (68) have a helical toothing.

12. The electromechanical brake force booster (10) as claimed in any of claims 1 to 11, wherein the at least one first spur gear (42) and the at least one second spur gear (44) are each connected to a shaft, the shafts each having at least one gearwheel (70); and/or
wherein the drive arrangement has at least one control unit (14) which is configured for actuating the at least one electric motor (12).

13. The electromechanical brake force booster (10) as claimed in any of claims 1 to 12, wherein the drive arrangement in the state mounted in a vehicle is arranged in such a manner that the axis of rotation (A1) of the at least one electric motor (12) runs perpendicularly to the longitudinal axis (LA) of the at least one actuating device (18) and at a predetermined angle with respect to the vertical axis of the vehicle; and/or
wherein the at least one actuating device (18) has at least one actuating unit (62) which can be acted upon with a pedal force exerted on a brake pedal, and at least one actuating element (58) which is driven by the at least one electric motor (12) via the gearing (16).

14. The electromechanical brake force booster (10) as claimed in any of claims 1 to 13, wherein the electromechanical brake force booster (10) is attachable to a vehicle via at least one fastening device (80), wherein the at least one fastening device (80) defines a fastening plane (BE) in which the longitudinal axis (LA) of the at least one actuating device (18) lies.

15. An electrohydraulic motor vehicle brake system comprising a brake cylinder (20) and an electromechanical brake force booster (10) as claimed in any of claims 1 to 14, wherein the electromechanical brake force booster (10) causes an actuation of the brake cylinder (20).

## Revendications

1. Servofrein électromécanique (10) pour un système de freinage électrohydraulique de véhicule, comprenant un agencement d'entraînement pour entraîner au moins un dispositif d'actionnement (18) destiné à actionner un cylindre de frein (20), l'agencement d'entraînement comprenant au moins un moteur électrique (12) et une transmission (16) pour accoupler ledit au moins un moteur électrique (12) audit au moins un dispositif d'actionnement (18),
**caractérisé en ce que**
la transmission (16) comprend au moins une première roue cylindrique (42) et au moins une deuxième roue cylindrique (44), et **en ce que**
la transmission (16) comprend en outre un étage de transmission intermédiaire (40) qui accouple en transmission de couple ledit au moins un moteur électrique (12) à ladite au moins une première roue cylindrique (42) et ladite au moins une deuxième roue cylindrique (44), l'étage de transmission intermédiaire (40) entraînant ladite au moins une première roue cylindrique (42) directement et ladite au moins une deuxième roue cylindrique (44) par l'intermédiaire d'au moins une roue intermédiaire (68), l'étage de transmission intermédiaire (40) comprenant au moins une première roue dentée (46) et au moins une deuxième roue dentée (104) coaxiale à ladite au moins une première roue dentée (46), et **en ce que**
la transmission (16) comprend une roue dentée d'entrée (38) entraînée par ledit au moins un moteur électrique (12), qui entraîne ladite au moins une première roue dentée (46) de l'étage de transmission intermédiaire (40), ladite au moins une deuxième roue dentée (104) entraînant ladite au moins une première roue cylindrique (42) et ladite au moins une roue intermédiaire (68).

2. Servofrein électromécanique (10) selon la revendication 1,
dans lequel ladite au moins une deuxième roue dentée (104) entraîne ladite au moins une première roue cylindrique (42) directement et ladite au moins une deuxième roue cylindrique (44) par l'intermédiaire de ladite au moins une roue intermédiaire (68) ; et/ou
dans lequel l'étage de transmission intermédiaire (40) est réalisé sous la forme d'une transmission à roues cylindriques et ladite au moins une première roue dentée (46) et ladite au moins une deuxième roue dentée (104) de l'étage de transmission intermédiaire (40) forment une roue dentée double.

3. Servofrein électromécanique (10) selon l'une des revendications 1 ou 2,
dans lequel ladite au moins une première roue dentée (46) de l'étage de transmission intermédiaire (40) est disposée de manière décalée dans la direction de l'axe de rotation (A1) dudit au moins un moteur électrique (12) par rapport à ladite au moins une deuxième roue dentée (104) de l'étage de transmission intermédiaire (40), ladite au moins une première roue cylindrique (42) et ladite au moins une deuxième roue cylindrique (44).

4. Servofrein électromécanique (10) selon l'une des revendications 1 à 3,
dans lequel la roue dentée d'entrée (38) et ladite au moins une première roue dentée (46) de l'étage de transmission intermédiaire (40) sont disposées dans un premier plan dans la direction de l'axe de rotation (A1) dudit au moins un moteur électrique ; et/ou dans lequel ladite au moins une deuxième roue dentée (104), ladite au moins une première roue cylindrique (42), ladite au moins une roue intermédiaire (68) et ladite au moins une deuxième roue cylindrique (44) sont disposées dans un deuxième plan dans la direction de l'axe de rotation (A1) dudit au moins un moteur électrique (12).

5. Servofrein électromécanique (10) selon l'une des revendications 1 à 4,
dans lequel un embrayage (76) est prévu entre ledit au moins un moteur électrique (12) et la transmission (16), lequel accouple un arbre de sortie (74) dudit au moins un moteur électrique (12) à un arbre d'entrée (48) de la transmission (16), la roue dentée d'entrée (38) entraînée par ledit au moins un moteur électrique (12) étant prévue sur l'arbre d'entrée (48) de la transmission (16).

6. Servofrein électromécanique (10) selon l'une des revendications 1 à 5,
lequel servofrein électromécanique (10) présente un carter en plusieurs parties (22, 24, 26, 28), au moins une partie de carter (26, 28) étant associée à la transmission (16).

7. Servofrein électromécanique (10) selon la revendication 6 en combinaison avec la revendication 5,
dans lequel l'arbre d'entrée (48) de la transmission (16) est monté sur au moins une partie de carter (28) associée à la transmission (16) ;
dans lequel, en option, l'étage de transmission intermédiaire (40) est monté sur au moins une partie de carter (28) associée à la transmission (16).

8. Servofrein électromécanique (10) selon l'une des revendications 1 à 7,
dans lequel ledit au moins un dispositif d'actionnement (18) présente au moins une section de crémaillère (60) pouvant être accouplée à la transmission (16), et
dans lequel, en option, ledit au moins dispositif d'actionnement (18) présente une première et une deuxième section de crémaillère (60) qui sont disposées sur des côtés opposés dudit au moins un dispositif d'actionnement (18).

9. Servofrein électromécanique (10) selon l'une des revendications 1 à 8,
dans lequel ledit au moins un moteur électrique (12) et la transmission (16) sont disposés sur des côtés opposés dudit au moins un dispositif d'actionnement (18).

10. Servofrein électromécanique (10) selon l'une des revendications 6 à 9 en combinaison avec la revendication 5,
dans lequel l'arbre d'entrée (48) de la transmission (16) s'étend transversalement à l'axe longitudinal (LA) dudit au moins un dispositif d'actionnement (18).

11. Servofrein électromécanique (10) selon l'une des revendications 1 à 9,
dans lequel au moins ladite au moins une première roue cylindrique (42), ladite au moins une deuxième roue cylindrique (44) et ladite au moins une roue intermédiaire (68) présentent une denture hélicoïdale.

12. Servofrein électromécanique (10) selon l'une des revendications 1 à 11,
dans lequel ladite au moins une première roue cylindrique (42) et ladite au moins une deuxième roue cylindrique (44) sont reliées chacune à un arbre qui présente chaque fois au moins une roue dentée (70) ; et/ou
dans lequel l'agencement d'entraînement présente au moins une unité de commande (14) qui est conçue pour commander ledit au moins un moteur électrique (12).

13. Servofrein électromécanique (10) selon l'une des revendications 1 à 12,
dans lequel l'agencement d'entraînement peut être disposé à l'état monté dans un véhicule de telle sorte que l'axe de rotation (A1) dudit au moins un moteur électrique (12) s'étende perpendiculairement à l'axe longitudinal (LA) dudit au moins un dispositif d'actionnement (18) et selon un angle prédéterminé par rapport à l'axe vertical du véhicule ; et/ou
dans lequel ledit au moins un dispositif d'actionnement (18) présente au moins une unité d'actionnement (62) pouvant être sollicitée par une force exercée sur une pédale de frein et au moins un élément d'actionnement (58) entraîné par ledit au moins un moteur électrique (12) par l'intermédiaire de la transmission (16).

14. Servofrein électromécanique (10) selon l'une des revendications 1 à 13,
lequel servofrein électromécanique (10) peut être monté sur un véhicule par l'intermédiaire d'au moins un dispositif de fixation (80), ledit au moins un dispositif de fixation définissant un plan de fixation (BE) dans lequel se trouve l'axe longitudinal (LA) dudit au moins un dispositif d'actionnement (18).

15. Système de freinage électrohydraulique de véhicule automobile comprenant un cylindre de frein (20) et un servofrein électromécanique (10) selon l'une des revendications 1 à 14, le servofrein électromécanique (10) produisant un actionnement du cylindre de frein (20).
